# EUROPEAN PATENT SPECIFICATION

(11) **EP 0 916 116 B1**
(45) Date of publication and mention of the grant of the patent: **18.12.2002**
(21) Application number: 98903223.0
(22) Date of filing: 27.02.1998
(51) Int. Cl.: G06F 3/00, A63F 9/24

(54) **A MULTIMEDIA METHOD AND SYSTEM FOR INTERACTION BETWEEN A SCREEN-BASED HOST AND VARIOUS DISTRIBUTED AND FREE-STYLED INFORMATION CONTAINING ITEMS, AND AN INFORMATION CONTAINING ITEM FOR USE WITH SUCH SYSTEM**
MULTIMEDIAVERFAHREN UND -SYSTEM ZUR INTERAKTION ZWISCHEN EINEM BILDSCHIRMBASIERTEN ZENTRALRECHNER UND VERSCHIEDENEN VERTEILTEN UND FREI GESTALTETEN INFORMATIONSTRAGENDEN GEGENSTÄNDEN, SOWIE INFORMATIONSTRAGENDER GEGENSTAND ZUR VERWENDUNG IN EINEM SOLCHEN SYSTEM
PROCEDE ET SYSTEME MULTIMEDIA D'INTERACTION ENTRE UN HOTE, DOTE D'UN ECRAN, ET DIVERS ARTICLES CONTENANT DES INFORMATIONS REPARTIES ET LIBRES, ET ARTICLE CONTENANT DES INFORMATIONS, UTILE DANS UN TEL SYSTEME

(30) Priority: 12.03.1997 EP 97200738
(43) Date of publication of application: 19.05.1999
(73) Proprietor: Koninklijke Philips Electronics N.V., 5621 BA Eindhoven (NL)
(72) Inventor: DOBRUSSKIN, Christoph, NL-5656 AA Eindhoven (NL); VAN DORSSEN, Jacoba, Johanna, NL-5656 AA Eindhoven (NL); McGROARY, Paul, Denis, NL-5656 AA Eindhoven (NL); SWALES, Roger, Niel, NL-5656 AA Eindhoven (NL); VAN DER VOET, Jan, Paul, Cornelis, NL-5656 AA Eindhoven (NL)
(74) Representative: Faessen, Louis Marie Hubertus
(86) International application number: IB9800237
(87) International publication number: WO98040815

(56) References cited:
- WO-A-96/03188

## Description

### BACKGROUND OF THE INVENTION

The invention relates to a multimedia method for use with a screen-based host system provided with information processing and I/O facilities, and interacting with one or more distributed items that are arranged for storing information and exchanging information with the host system. Various computer systems have been proposed to interact with external memory carriers for exchanging data therewith, such as programs. On the other hand, multimedia systems that to a certain extent are designed to operate under non-data-processing conditions and with various different types of operator persons, that in particular may not be computer literate, should have a user interface that is very different in style and functionality. The inventors have recognized that functionality and styling of such data carriers should attract such other social environment.

### SUMMARY TO THE INVENTION

In consequence, amongst other things, it is an object of the present invention to provide the system versus such data items with an immediate reactivity and physical recognizability as to their content. Now therefore, according to one of its aspects, the invention is characterized in that said multimedia method comprises the steps of allowing the distributed items to exchange analog or digital information under proximity conditions with respect to the host, but without requiring formatted berth facilities of the host,
with respect to various such items evoking through self-identifying thereof associated specific iconizing by the host for signalling to a user an associated and selective information processing and/or entertainment oriented service field, furthermore so allowing by the host a user person to activate information processing operations with respect to the selective service field,
having each item so keeping abreast of host-generated results during such proximity conditions as being relevant to its associated field,
whilst allowing free styling of such item with respect to physical shape requirements thereto.
The evoking of a specific icon on the host screen is token for an allowable interactivity, and the storing of appropriate processing results in the item allows a user to discontinue a session, whilst still being able to later resume at an interaction point that is deemed relevant. The free-styling of the items makes recognizing easier for little children and other categories of people.

By itself, PCT published Patent application WO 96 03188 A1 discloses a system wherein particular toy figures in proximity conditions with the system may identify themselves versus the system for so activating an associated audio visual display sequence on the system display. However, the toys will only identify themselves towards the system, whereas the present invention additionally allows to store various data processing quantities in the information item, as well as to lend to the items a characteristic shape.

The invention also relates to a system arranged for implementing the method, and to an item for use with the method. Further advantageous aspects of the invention are recited in dependent Claims.

### BRIEF DESCRIPTION OF THE DRAWING

These and further aspects and advantages of the invention will be discussed more in detail with reference to the disclosure of preferred embodiments hereinafter, and in particular with reference to the appended Figures that show:
Figure 1, a block diagram of a system of the invention;
Figure 2, a block diagram of an item of the invention;
Figure 3, a flow chart of the interaction.

### DETAILED DESCRIPTION OF PREFERRED EMBODIMENTS

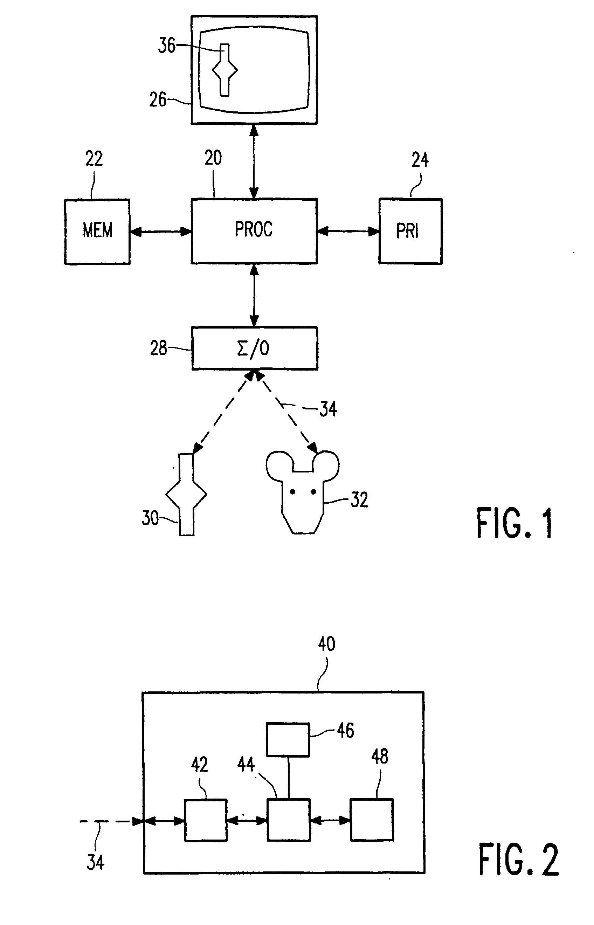

Figure 1 is a block diagram of an exemplary system according to the invention. The screen-based host has central processing facility 20, memory facility 22, printer facility 24, display screen facility 26, and I/O facility 28. A system with fewer than all of the above facilities could be feasible as well. All of these facilities are interconnected as shown by arrows. Two of the distributed and free-styled information items 30, 32 have been shown, one of them having a geometrical shape, and the other being shaped as a recognizable toy figurine. The screen is preferably a touch or stylus actuated screen. The I/O facilities may comprise keyboard, joystick, mouse, speech-based interaction and further facilities which have not been shown specifically; none of these are really indispensable, provided that at least one mechanism for receiving user interaction is available. In particular however, arrows 34 symbolize wireless intercommunication between I/O subsystem 28 and the distributed items 30, 32. As shown on the display screen 26, interaction between item 30 and I/O makes an icon 36 appear that may correspond to the physical shape of the item in question, or otherwise symbolize the associated service field.

Figure 2 is a block diagram of an information item 40 according to the invention. As shown, the item itself has not been detailed as to the styling thereof. Various parts of the item are communication part 40 for interfacing to wireless connection 34, processing part 44, permanent memory part 48 and variable memory part 46. All of these facilities are internally interconnected as shown by arrows. Furthermore, battery powering is on board but has not been shown for brevity; solar cell powering is feasible as well. Useable examples for the styling are: semi-personal toy figures like Barbie-dolls or (semi)-animals, geometrical shapes like diabolo's or toroids, fantasy shapes or minimal art with contorted or abstracted forms, or rather common household articles such as a decorative vase, a presse-papier, or other. The electronic part thereof would be barely more than a single solid state chip with a few elements for the communication, such as a loop antenna or the like. The two-dimensional icon representation on the screen of the generally three-dimensional item may symbolize the shape of the item. Alternatively, the icon may represent the associated service field. Further, after entering the screen, the icon may be a so-called dynamic icon that suggests some level of life or action therein. Such dynamism may include geometrical transform in 2-D or 3-D, animation, colour change, and others. Also, the entire screen may be filled with graphics that represent the item and/or the service filed, such as used in screen savers.

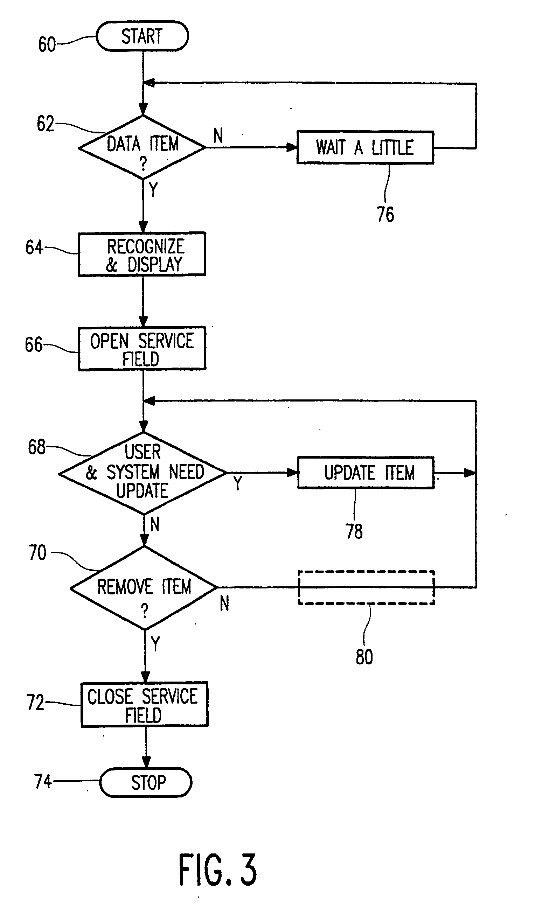

Figure 3 is an exemplary flow chart of the interaction between the host system and a single distributed item. In block 60, the host system is activated, such as by a power switch. In block 62, the host detects whether a distributed item is within an appropriate proximity; this may be a distance of about one meter, or a presence in the same room. If no, block 76 implements a waiting loop. If yes, in block 64, the identity of the item is recognized. This may be effected through an elementary dialogue between host and item, or even with the item as an object that is electronically passive, e.g. in that it may detune an RF field or through other means. The identity may be a discrete quantity, such as a frequency value in a particular range, or a full digital information, such as an eight-bit code stored in a permanent memory part of the item. Upon recognition, the associated icon is displayed, either in a standard manner, or updated from some information retrieved from the variable memory part of the item. There may be feedback on the item, such as in the form of a LED or beep, even if the proximity condition is not fulfilled.

Next, the service field is opened. This field may pertain to a particular information-related area pertaining to the item, such as a video game in which the item figures as a character, an audio story that is read from the host memory and may imply choices to be made by a listener, a video diary that may be kept and updated by the user person, and various others. Various different service fields may in alternation be produced by any host. The user may now interact immediately with the host, for changing content and/or visualisation of the service field. In block 68 the system detects whether user item or system would need an update. If yes, in block 78, the content of the variable memory of the item is updated. In block 70, it is detected whether the item is being removed or has been removed from the proximity condition in question. If no, in block 80 a waiting interval may be implemented or not. If the item has been removed, in block 72 the service field is closed, the content of the permanent memory of the item is being frozen for later use, and the iconized display of the actual item is suppressed. In block 74, the system, and in particular the host, is stopped.

The information stored into the item to keep it abreast with the associated service field may be various. In a game of skills, the information may indicate the level of skill actually attained by the user person. In case of a toy, the user may decide to give the item a name, and the name is stored, so that the host may call by voice the item upon its presentation. This also applies if the service field would also run on another host. The information may be a brief song, so that the host will sing this song when the item is again presented. Various other types of information might be relished by a user person.

## Claims

1. A multimedia method for use with a screen-based host system provided with information processing (20) and I/O facilities (28), and interacting with one or more distributed items (30,32) that are arranged for storing information and exchanging information with the host system,
**characterized in that** said multimedia method comprises the steps of allowing the distributed items (30,32) to exchange analog or digital information under proximity conditions with respect to the host, but without requiring formatted berth facilities of the host,
with respect to various such items evoking through self-identifying thereof associated specific iconizing by the host for signalling to a user an associated and selective information processing and/or entertainment oriented service field, furthermore so allowing by the host a user person to activate information processing operations with respect to the selective service field,
having each item so keeping abreast of host-generated results during such proximity conditions as being relevant to its associated field,
whilst allowing free styling of such item with respect to physical shape requirements thereto.

2. A multimedia system comprising a screen-based host having information processing (20) and I/O facilities (28), and one or more distributed items (30,32) that are arranged for storing information and exchanging information with the host system,
**characterized in that** said I/O facilities (28) are arranged for allowing the distributed items (30,32) to exchange analog or digital information under proximity conditions with respect to the host, but without requiring formatted berth facilities,
said host having recognition means for with respect to various such items evoking self-identifying thereof, and having iconizing means for as responsive to said self-identifying producing associated specific iconizing for signalling to a user an associated and selective information procession and/or entertainment oriented service field, and having reception means for furthermore allowing a user person to activate information processing operations with respect to the selective service field,
and having transmission means for so letting each item keep abreast of host-generated results during such proximity conditions as being relevant to its associated field,
whereby such item is being allowed free styling with respect to physical shape requirements thereto.

3. An information item arranged for distributed use in a multimedia system comprising a screen-based host that has information processing (20) and I/O facilities (28), the item being arranged for storing information and furthermore for exchanging information with the host,
host, **characterized in that** said item (30,32) is arranged for allowing to exchange analog or digital information under proximity conditions with respect to said I/O facilities (28) without requiring formatted berth facilities,
said item having self-identifying means for with respect to various such items through self-identifying versus said host, allowing said host to recognize the actual item for thereby activating a particular information processing and/or entertainment oriented service field, and said item having reception means for upon said person activating information processing operations with respect to the service field in question, then allowing such item to keep abreast of host-generated results during such proximity conditions as being relevant to its associated field,
wherein such item has been allowed free styling with respect to physical shape requirements thereto.

## Patentansprüche

1. Multimediaverfahren zur Anwendung bei einem bildschirmbasierten Gastgebersystem, das mit Informationsverarbeitungs- (20) und I/O-Möglichkeiten (28) versehen ist, und zur Interaktion mit einem oder mehreren verteilten Gegenständen (30, 32), die zum Speichern von Information und zum Austauschen von Information mit dem Gastgebersystem vorgesehen sind, **dadurch gekennzeichnet, dass** das genannte Multimediaverfahren die nachfolgenden Schritte umfasst:
das Gestatten, dass die verteilten Gegenstände (30, 32) analoge oder digitale Information unter Annäherungsbedingungen gegenüber dem Gastgeber austauschen, aber ohne dass formatierte Unterbringungsmöglichkeiten des Gastgebers erforderlich sind,
in Bezug auf einige dieser Gegenstände das Aufrufen durch Selbstidentifikation derselben assoziierter spezifischer Ikonisierung durch den Gastgeber zum Signalisieren zu einem Benutzer eines assoziierten und selekiven Informationsverarbeitungs- und/oder Unterhaltungsorientierten Servicefeldes, wobei weiterhin der Gastgeber einen benutzenden Person gestattet, Informationsverarbeitungsvorgänge zu aktivieren in Bezug auf das selektive Servicefeld,
wobei jeder Gegenstand im Bilde ist von den vom Gastgeber erzeugten Ergebnissen unter solchen Annäherungsbedingungen, die für das zugeordnete Feld relevant sind,
während eine freie Gestaltung eines derartigen Gegenstandes in Bezug auf die physikalischen Formanforderungen dazu erlaubt wird.

2. Multimediasystem mit einem schirmbasierten Gastgeber mit Informationsverarbeitungs- (20) und I/O-Möglichkeiten (28) und mit einem oder mehreren verteilten Gegenständen (30, 32) die vorgesehen sind zum Speichern von Information und zum Austauschen von Information mit dem Gastgebersystem, **dadurch gekennzeichnet, dass** die genannten I/O-Möglichkeiten (28) vorgesehen sind, damit die verteilten Gegenstände (30, 32) analoge oder digitale Information austauschen können, und zwar unter Nähe-Bedingungen gegenüber dem Gastgeber, aber ohne dass formatierte Unterbringungsmöglichkeiten erforderlich sind, wobei der genannte Gastgeber Wiedererkennungsmittel aufweist um gegenüber einigen derartigen Gegenständen Selbstidentifikation aufzurufen und mit Ikonisierungsmitteln um in Bezug auf die genannte Selbstidentifikation spezifische Ikonisierung zu erzeugen zum Signalisieren eines Benutzers über ein assoziiertes und selektives Informationsverarbeitungs- und/oder Unterhaltungsorientiertes Servicefeld und mit Empfangsmitteln um weiterhin einen Benutzer in den Stand zu setzen, Informationsverarbeitungsvorgänge gegenüber dem selektiven Servicefeld zu aktivieren und mit Übertragungsmitteln, damit auf diese Weise jeder Gegenstand mit den vom Gastgeber erzeugten Ergebnissen während derartiger Nähe-Bedingungen, die für das assoziierte Feld wichtig sind, Schritt halten kann, wobei ein derartiger Gegenstand die Möglichkeit einer freien Gestaltung in Bezug auf die physikalischen Formanforderungen derselben hat.

3. Informationsgegenstand, vorgesehen für verteilten Gebrauch in einem Multimediasystem mit einem schirmbasierten Gastgeber, der Informationsverarbeitungs- (20) und I/O-Möglichkeiten (28) hat, wobei der Gegenstand vorgesehen ist zum Speichern von Information und weiterhin zum Austauschen von Information mit dem Gastgeber, **dadurch gekennzeichnet, dass** der genannte Gegenstand (30, 32) vorgesehen ist, damit analoge oder digitale Information ausgetauscht werden kann unter Nähe-Bedingungen gegenüber den genannten I/O-Möglichkeiten (28) ohne dass formatierte Unterbringungsmöglichkeiten erforderlich sind, wobei der genannte Gegenstand selbstidentifizierende Mittel hat um gegenüber mehreren derartigen Gegenständen durch Selbstidentifikation gegenüber dem genannten Gastgeber, diesem Gastgeber die Möglichkeit zu bieten, den aktuellen Gegenstand wiederzuerkennen um dadurch ein bestimmtes Information verarbeitendes und/oder unterhaltungsorientiertes Servicefeld zu aktivieren und wobei der genannte Gegenstand Empfangsmittel aufweist um dann, wenn die genannte Person Information verarbeitende Vorgänge gegenüber dem betreffenden Servicefeld aktiviert, einem derartigen Gegenstand die Möglichkeit zu bieten, während derartiger Nähe-Bedingungen, die für das betreffende Feld relevant sind, mit den von dem Gastgeber erzeugten Ergebnissen Schritt zu halten, wobei ein derartiger Gegenstand die Möglichkeit einer freien Gestaltung in Bezug auf die physikalischen Formanforderungen derselben hat.

## Revendications

1. Procédé multimédia à utiliser avec un système hôte doté d'un écran, pourvu d'équipements de traitement d'informations (20) et d'E/S (28), et interagissant avec un ou plusieurs éléments distribués (30, 32) qui sont agencés pour stocker des informations et échanger des informations avec le système hôte, **caractérisé en ce que** ledit procédé multimédia comprend des étapes visant à permettre aux éléments distribués (30, 32) d'échanger des informations analogiques ou numériques dans des conditions de proximité par rapport à l'hôte, mais sans requérir des équipements d'accostage formatés de l'hôte,
par rapport à divers éléments de ce type, de susciter, par l'auto-identification de ceux-ci, une icônisation spécifique associée par l'hôte pour signaler à un utilisateur un champ de traitement d'informations et/ou de service avec orientation divertissement associé et sélectif, ce qui, en outre, permet, grâce à l'hôte, à une personne utilisatrice d'activer des opérations de traitement d'informations par rapport au champ de service sélectif,
faisant en sorte que chaque élément suive les résultats générés par l'hôte pendant de telles conditions de proximité concernant son champ associé,
tout en permettant une stylisation libre d'un tel élément quant aux exigences de forme physique de celui-ci.

2. Système multimédia comprenant un hôte doté d'un écran comportant des équipements de traitement d'informations (20) et d'E/S (28) et un ou plusieurs éléments distribués (30,32) qui sont agencés pour stocker des informations et échanger des informations avec le système hôte,
**caractérisé en ce que** lesdits équipements d'E/S (28) sont agencés pour permettre aux éléments distribués (30, 32) d'échanger des informations analogiques ou numériques dans des conditions de proximité par rapport à l'hôte, mais sans requérir des équipements d'accostage formatés,
ledit hôte ayant un moyen de reconnaissance pour, par rapport à divers éléments, susciter l'auto-identification de celui-ci, et comportant un moyen d'icônisation pour, en réponse à ladite auto-identification, produire une iconisation spécifique associée pour signaler à un utilisateur un champ de traitement d'information et/ou de service à orientation de divertissement associé et sélectif, et ayant un moyen de réception pour permettre en outre à une personne utilisatrice d'activer des opérations de traitement d'information par rapport au champ de service sélectif,
et comportant un moyen de transmission pour faire en sorte que chaque élément suive les résultats générés par l'hôte pendant de telles conditions de proximité concernant son champ associé,
ce qui fait qu'un tel élément est susceptible d'une stylisation libre par rapport aux exigences de forme physique de celui-ci.

3. Elément d'information agencé pour une utilisation distribuée dans un système multimédia comprenant un hôte doté d'un écran qui est pourvu d'équipements de traitement d'information (20) et d'E/S (28), l'élément étant agencé pour stocker des informations et, en outre, pour échanger des informations avec l'hôte,
**caractérisé en ce que** ledit élément (30, 32) est agencé pour permettre d'échanger des informations analogiques ou numériques dans des conditions de proximité par rapport auxdits équipements d'E/S (28) sans requérir des équipements d'accostage formatés,
ledit élément ayant un moyen d'auto-identification pour, par rapport à différents éléments de ce type et par une auto-identification vis-à-vis de l'hôte, permettre audit hôte de reconnaître l'élément réel pour ainsi activer un champ de traitement d'information et/ou de service à orientation de divertissement particulier, et ledit élément ayant un moyen de réception pour, au moment de l'activation par la personne d'opérations de traitement d'informations par rapport au champ de service en question, autoriser alors à un tel élément d'être tenu au courant des résultats générés par l'hôte pendant de telles conditions de proximité, concernant son champ associé,
dans lequel un tel élément a reçu une autorisation de stylisation libre par rapport aux exigences de forme physique de celui-ci.
